# EUROPÄISCHE PATENTSCHRIFT

(11) **EP 3 776 816 B1**
(45) Veröffentlichungstag und Bekanntmachung des Hinweises auf die Patenterteilung: **04.10.2023**
(21) Anmeldenummer: 19756179.8
(22) Anmeldetag: 20.08.2019
(51) Int. Cl.: H02K 5/128, H02K 5/173, H02K 9/22

(54) **ELEKTROMOTOR MIT EINER WÄRMEABLEITUNG FÜR DAS MOTORWELLENLAGER**
ELECTRIC MOTOR WITH HEAT DISSIPATION FOR THE MOTOR SHAFT BEARING
MOTEUR ÉLECTRIQUE POURVU D'UNE DISSIPATION DE CHALEUR POUR PALIER D'ARBRE DE MOTEUR

(30) Priorität: 07.09.2018 DE 102018121923
(43) Veröffentlichungstag der Anmeldung: 17.02.2021
(73) Patentinhaber: EBM-PAPST ST. GEORGEN GMBH & CO. KG, 78112 St. Georgen (DE)
(72) Erfinder: KISCH, Michael, 78112 St. Georgen (DE); WEISSER, Wilhelm, 78126 Königsfeld/Buchenberg (DE); SCHEFFCZYK, Jochen, 78050 Villingen-Schwenningen (DE); GHODSI-KHAMENEH, Hassan, 77654 Offenburg (DE); HAUER, Daniel, 77799 Ortenberg (DE); HELLMANN, Marcus, 78089 Unterkirnach (DE); ZWETKOW, Alexander, 78682 Rottweil (DE)
(74) Vertreter: Staeger & Sperling Partnerschaftsgesellschaft mbB
(86) Internationale Anmeldenummer: PCT/EP2019/072301
(87) Internationale Veröffentlichungsnummer: WO 2020/048773

(56) Entgegenhaltungen:
- EP-A1- 0 160 132
- WO-A1-2015/063882
- DE-A1- 19 624 145

## Beschreibung

Die Erfindung betrifft einen Elektromotor in kompakter Bauweise mit einer Wärmeableitung für das Motorwellenlager.

Bei Elektromotoren, die eine hohe Drehzahl der Motorwelle erzeugen, steigt die Verlustleistung des die Motorwelle lagernden Kugellagers aufgrund von starker Wärmeentwicklung deutlich an. Vor allem bei kompakten Ausführungen des Elektromotors, bei denen das Kugellager unmittelbar angrenzend zu vielen weiteren Bauteilen angeordnet ist, kann die erzeugte Wärme nicht in ausreichendem Maße abgeführt werden.

Druckschriftlicher Stand der Technik im vorliegenden technischen Gebiet, welcher den Oberbegriff des Anspruchs 1 widerspiegelt, ist in den Druckschriften EP 0 160 132 A1, DE 196 24 145 A1 und WO 20151063882 A1 offenbart.

Der Erfindung liegt deshalb die Aufgabe zugrunde, bei einem Elektromotor eine verbesserte Wärmeableitung für das die Motorwelle lagernde Kugellager bereit zu stellen.

Diese Aufgabe wird durch die Merkmalskombination gemäß Patentanspruch 1 gelöst.

Erfindungsgemäß wird ein Elektromotor mit einem Motorgehäuse vorgeschlagen, das einen Wellenabschnitt zur Aufnahme einer Motorwelle und einen Motorabschnitt zur Aufnahme einer Motorelektronik und von Motorwicklungen aufweist. Der Wellenabschnitt und der Motorabschnitt sind durch einen in dem Motorgehäuse angeordneten Spalttopf voneinander abgedichtet getrennt, wobei in dem Spalttopf ein metallischer Kugellagertopf angeordnet ist, in dem ein Kugellager befestigt ist. Der Kugellagertopf liegt mittelbar über den Spalttopf an einem mit der Außenumgebung in Verbindung stehenden Abschnitt des Motorgehäuses an, so dass das Motorgehäuse als Kühlkörper fungiert und eine von dem Kugellager im Betrieb erzeugte Wärme über den Kugellagertopf und über den Spalttopf an das Motorgehäuse und die Außenumgebung abgleitet wird.

Der Spalttopf wird verwendet, um den Wellenabschnitt und den Motorabschnitt zu trennen und einen Gasaustausch zwischen Kurbelgehäuse und Elektronik bzw. Motorwicklungen zu verhindern.

Der Spalttopf mit dem darin angeordneten Kugellagertopf führt jedoch zu einem Aufbau, bei dem das Kugellager stark zentral eingepackt angeordnet werden muss und wenig seiner im Betrieb erzeugten Wärme nach außen abführen kann. Die Wärmeableitung erfolgt erfindungsgemäß durch eine Anbindung des Spalttopfes und Kugellagertopfes mit dem darin aufgenommenen Kugellager an das Motorgehäuse.

In einer Ausführungsvariante des Elektromotors ist vorgesehen, dass der Spalttopf einstückig durch das Motorgehäuse um eine Rotationsachse der Motorwelle gebildet ist. Insbesondere bildet das Motorgehäuse eine umlaufende Außenwandung, an die sich auf einer axialen Seite eine Axialwandung anschließt, in die der Spalttopf eingesenkt wird. Der Spalttopf ist vorzugsweise hohlzylindrisch mit Abschnitten unterschiedlichen Durchmessers ausgebildet, wobei im axial am weitesten in das Motorgehäuse hineinragenden Abschnitt der Kugellagertopf angeordnet ist.

Dabei ist eine Ausführung günstig, bei welcher der Spalttopf und der Kugellagertopf in dem Abschnitt des Spalttopfes, in dem der Kugellagertopf angeordnet ist, formidentisch ausgebildet sind. In anderen Worten bestimmen der Kugellagertopf und der Spalttopf dieselben Außenkonturen.

Vorteilhaft ist ferner eine Ausführung des Elektromotors, bei der zwischen dem Spalttopf und dem Abschnitt des Motorgehäuses, der mittelbar über den Spalttopf mit dem Kugellagertopf in Verbindung steht, eine Wärmeleitpaste vorgesehen ist. Die Wärmeleitpaste bildet vorzugsweise eine Zwischenschicht und ermöglicht eine Wärmeanbindung des Motorgehäuses an den Spalttopf, ohne dass sich die Bauteile berühren. Somit bleiben Vibrationen der einzelnen Bauteile voneinander entkoppelt.

Erfindungsgemäß weist das Motorgehäuse einen lösbaren Gehäusedeckel auf, der auf eine axiale Seite des übrigen Motorgehäuses aufsetzbar ist und den Abschnitt des Motorgehäuses bildet, der mittelbar über den Spalttopf mit dem Kugellagertopf und mithin dem Kugellager in Verbindung steht. Soweit der Spalttopf mit dem Motorgehäuse einstückig gebildet ist, kann die Montage der Bauteile des Elektromotors über die axial dem Spalttopf gegenüberliegende Seite erfolgen, auf welcher der Gehäusedeckel abnehmbar positioniert wird. Gleichzeitig bietet die Lösung mit einem Gehäusedeckel als Kühlkörper eine große Fläche zur Wärmeableitung.

Die Leistung der Wärmeableitung wird bei dem Elektromotor erfindungsgemäß noch verbessert, indem der Gehäusedeckel ein axial in Richtung des Kugellagertopfes vorstehendes Kühlelement aufweist, das mittelbar über den Spalttopf eine Anbindungsfläche an den Kugellagertopf lokal vergrößert.

Als vorteilhafte Ausführung ist vorgesehen, dass das Kühlelement zylindrisch oder konusförmig mit einer axialen Anbindungsfläche an eine axiale Außenwandfläche des Spalttopfes ausgebildet ist. Somit überträgt sich die Wärme des Kugellagers von dem Kugellagertopf auf den Spalttopf, dann weiter von dessen axialer Außenwandfläche an die Anbindungsfläche des zylindrischen Kühlelements und schließlich an die gesamte Fläche des Gehäusedeckels.

Der Kugellagertopf bildet in einer bevorzugten Ausführung einen Kugellagersitz, in den das Kugellager eingepresst ist.

Zudem ist eine Variante des Elektromotors dadurch gekennzeichnet, dass der Kugellagertopf zwischen dem Kugellager und dem mit der Außenumgebung in Verbindung stehenden Abschnitt des Motorgehäuses einen Freiraum aufweist. Das Kugellager kann somit unmittelbar Wärme an die Luft in den Freiraum abgeben und steht nicht in unmittelbarem Kontakt mit der Axialfläche des Kugellagertopfes, die an dem Spalttopf und dem Kühlkörper anliegt.

Ferner ist bei dem Elektromotor in einer Weiterbildung vorgesehen, dass sich der Spalttopf axial durch das Motorgehäuse bis zu dem Gehäusedeckel erstreckt. Der Spalttopf bestimmt somit in axialer Richtung, d. h. entlang der Rotationsachse der Motorwelle, einen erheblichen Teil des zentral innen liegenden Motorgehäuses um die Rotationsachse. Vorzugsweise erstreckt sich der Spalttopf in axialer Richtung über 60-95%, weiter bevorzugt über 70-95%, noch weiter bevorzugt über 80-90% der axialen Gesamterstreckung des Motorgehäuses.

Vorteilhaft ist ferner ein Ausführungsbeispiel, bei dem das Motorgehäuse und der Spalttopf aus Kunststoff gebildet sind und der metallische Kugellagertopf mit dem Kunststoff unmittelbar im Spritzgussverfahren umspritzt ist.

Für eine kompakte Bauweise ist bei dem Elektromotor günstigerweise vorgesehen, dass die Wicklungen den Spalttopf in Umfangsrichtung umschließen. Gleichzeitig ist vorteilhaft, dass die Wicklungen axial zu dem Kugellager beabstandet angeordnet sind. Somit bleibt die Wärmeentwicklung der Motorwicklungen von derjenigen des Kugellagers getrennt.

Weiter vorteilhaft für eine kompakte Bauweise des Elektromotors ist, dass die Motorelektronik auf einer Leiterplatte angeordnet ist, die eine zentrale Öffnung aufweist und sich das von dem Gehäusedeckel vorstehende Kühlelement durch die zentrale Öffnung hindurch erstreckt. Alternativ wird hierzu vorgesehenen, dass sich der Spalttopf durch die zentrale Öffnung hindurch erstreckt. Weiter alternativ kann die Wärmeableitung auch unmittelbar über die Leiterplatte erfolgen. Dann kann auf die zentrale Öffnung auch verzichtet werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine seitliche Schnittansicht durch einen Elektromotor eines Ausführungsbeispiels;
- Fig. 2: eine Detailansicht aus Figur 1.

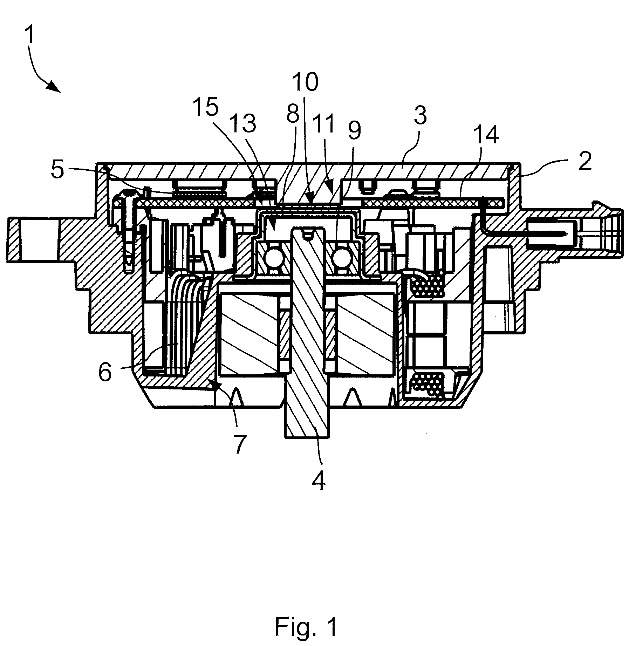

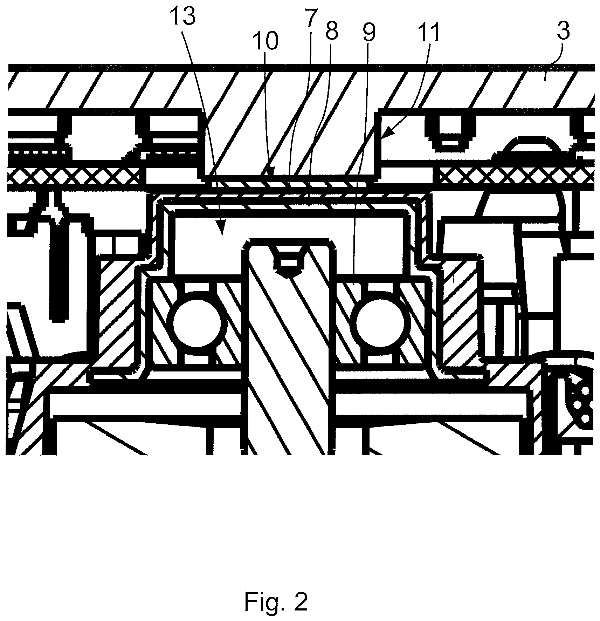

In den Figuren 1 und 2 ist ein Ausführungsbeispiel eines erfindungsgemäßen Elektromotors 1 in einer seitlichen Schnittansicht bzw. Detailansicht dargestellt.

Der Elektromotor 1 umfasst das einstückige Motorgehäuse 2 mit dem Gehäusedeckel 3, der lösbar axial auf dem Motorgehäuse 2 befestigbar ist und im befestigten Zustand einen Teil des Motorgehäuses bildet. Auf der axial dem Gehäusedeckel 3 gegenüberliegenden Seite bildet das Motorgehäuse 2 einstückig den sich axial ins Innere des Motorgehäuses 2 hinein erstreckenden Spalttopf 7 aus. Zwischen der Innenwandung des Motorgehäuses 2 und dem Außenmantel des Spalttopfes 7 liegt der Motorabschnitt, in dem die Motorwicklungen 6 und die auf der Leiterplatte 14 befestigte Motorelektronik 5 aufgenommen sind. Über den Spalttopf 7 dichtend abgegrenzt liegt innerhalb des Spalttopfes 7 der Wellenabschnitt, in dem die Motorwelle 4 entlang ihrer Rotationsachse verläuft. Der Spalttopf 7 erstreckt sich in axialer Richtung im Wesentlichen durch das gesamte Motorgehäuse 2 bis zu dem Gehäusedeckel 3.

Im in axialer Richtung gesehen tiefsten Abschnitt des Spalttopfes 7 ist der aus einem wärmeleitfähigen Material, insbesondere aus Metall gebildete Kugellagertopf 8 angeordnet. Das Motorgehäuse 2 mit dem Spalttopf 7 ist aus Kunststoff im Spritzgussverfahren um den Kugellagertopf 8 gespritzt, so dass der Spalttopf 7 und der Kugellagertopf 8 dieselbe Form bzw. Innen- und Außenkontur aufweisen und unmittelbar aneinander anliegen. Der Kugellagertopf 8 bestimmt den Lagersitz für das eingepresste Kugellager 9, in dem die Motorwelle 4 gelagert ist. Zwischen dem Kugellager 9 und der axialen Innenwandfläche des Spalttopfes 7 ist der Freiraum 13 gebildet, in den sich die Motorwelle 4 mit ihrem freien Ende hinein erstreckt.

Um die Rotationsachse ist an dem Gehäusedeckel 3 einstückig ein axial in Richtung des Kugellagertopfes 8 vorstehendes Kühlelement 11 in Form eines aus Vollmaterial gebildeten Zylinders ausgebildet. Axial zwischen dem Kühlelement 11 und der axialen Außenwandfläche des Spalttopfes 7 ist eine Schicht der Wärmeleitpaste 10 vorgesehen.

Die Wärmeableitung der durch das Kugellager 9 im Betrieb erzeugten Wärme erfolgt von dem Kugellager 9 auf den Kugellagertopf 8, weiter an den Spalttopf 7 und in axialer Richtung über die Wärmeleitpaste 10 an das Kühlelement 11 des Gehäusedeckels 3 des Motorgehäuses 2. Von dem Gehäusedeckel 3 wird die Wärme weiter an die Außenumgebung abgegeben. Das Motorgehäuse und insbesondere sein Gehäusedeckel 3 fungieren mithin als Kühlkörper. In einer nicht gezeigten alternativen Ausführung wird auf die Wärmeleitpaste 10 verzichtet und das Kühlelement 11 kontaktiert unmittelbar den Spalttopf 7.

Der Spalttopf 7 ist hohlzylindrisch und in drei axiale Abschnitte mit jeweils unterschiedlichen Innendurchmessern unterteilt. In Bereich des geringsten Durchmessers ist der Freiraum 13, im mittleren Bereich der Lagersitz mit dem Kugellager 9 und im Bereich des größten Innendurchmessers sind radial um den Spalttopf 7 die Motorwicklungen 6 angeordnet. Das Kugellager 9 ist somit gegenüber den Motorwicklungen 5 in axialer Richtung gesehen überlappungsfrei.

Die Leiterplatte 14 bestimmt um die Rotationsachse der Motorwelle 4 die zentrale Öffnung 15, durch die sich in axialer Richtung das von dem Gehäusedeckel 3 axial vorstehende Kühlelement 11 hindurch bis zu dem Spalttopf 7 erstreckt. In einer nicht dargestellten alternativen Variante kann sich anstelle des Kühlelements 11 der Bereich des geringsten Durchmessers des Spalttopfes 7 durch die Öffnung 15 erstrecken, so dass die Kontaktierung zwischen Spalttopf 7 und Kühlelement 11 axial oberhalb der Leiterplatte 14 erfolgt. Auch kann vorgesehen werden, den Gehäusedeckel 3 ohne Kühlelement 11 auszubilden und den Spalttopf 7 unmittelbar oder über die Wärmeleitpaste 10 an die axiale Innenwand des Gehäusedeckels 3 zur Anlage zu bringen.

## Patentansprüche

1. Elektromotor mit einem Motorgehäuse (2), das einen Wellenabschnitt zur Aufnahme einer Motorwelle (4) und einen Motorabschnitt zur Aufnahme einer Motorelektronik (5) und von Motorwicklungen (6) aufweist, wobei der Wellenabschnitt und der Motorabschnitt durch einen in dem Motorgehäuse (2) angeordneten Spalttopf (7) voneinander abgedichtet getrennt sind, wobei in dem Spalttopf (7) ein metallischer Kugellagertopf (8) angeordnet ist, in dem ein Kugellager (9) befestigt ist, und wobei der Kugellagertopf (8) mittelbar über den Spalttopf (7) an einem mit der Außenumgebung in Verbindung stehenden Abschnitt des Motorgehäuses anliegt, so dass das Motorgehäuse als Kühlkörper fungiert und eine von dem Kugellager (9) im Betrieb erzeugte Wärme über den Kugellagertopf (8) und über den Spalttopf (7) an das Motorgehäuse und die Außenumgebung abgeleitet wird, wobei das Motorgehäuse einen lösbaren Gehäusedeckel (3) aufweist, welcher auf eine axiale Seite des übrigen Motorgehäuses (2) aufsetzbar ist und welcher den Abschnitt des Motorgehäuses bildet, der mittelbar über den Spalttopf (7) mit dem Kugellagertopf (8) in Verbindung steht, **dadurch gekennzeichnet, dass** der Gehäusedeckel (3) ein axial in Richtung des Kugellagertopfes (8) vorstehendes Kühlelement (11) aufweist, das mittelbar über den Spalttopf (7) eine Anbindungsfläche an den Kugellagertopf (8) lokal vergrößert.

2. Elektromotor nach Anspruch 1, **dadurch gekennzeichnet, dass** der Spalttopf (7) einstückig durch das Motorgehäuse (2) um eine Rotationsachse der Motorwelle (4) gebildet ist.

3. Elektromotor nach Anspruch 1 oder 2, **dadurch gekennzeichnet, dass** der Spalttopf (7) und der Kugellagertopf (8) in dem Abschnitt des Spalttopfes (7), in dem der Kugellagertopf (8) angeordnet ist, formidentisch ausgebildet sind.

4. Elektromotor nach einem der vorigen Ansprüche, **dadurch gekennzeichnet, dass** zwischen dem Spalttopf (7) und dem Abschnitt des Motorgehäuses (2), der mittelbar über den Spalttopf (7) mit dem Kugellagertopf (8) in Verbindung steht, eine Wärmeleitpaste (10) vorgesehen ist.

5. Elektromotor nach einem der vorigen Ansprüche, **dadurch gekennzeichnet, dass** das Kühlelement (11) zylindrisch oder konusförmig mit einer axialen Anbindungsfläche an eine axiale Außenwandfläche des Spalttopfes (7) ausgebildet ist.

6. Elektromotor nach einem der vorigen Ansprüche, **dadurch gekennzeichnet, dass** der Kugellagertopf (8) einen Kugellagersitz ausbildet, in den das Kugellager (9) eingepresst oder eingeschoben ist.

7. Elektromotor nach einem der vorigen Ansprüche, **dadurch gekennzeichnet, dass** der Kugellagertopf (8) zwischen dem Kugellager (9) und dem mit der Außenumgebung in Verbindung stehenden Abschnitt des Motorgehäuses (2) einen Freiraum (13) aufweist.

8. Elektromotor nach einem der vorigen Ansprüche 5 bis 7, **dadurch gekennzeichnet, dass** sich der Spalttopf (7) axial durch das Motorgehäuse (2) bis zu dem Gehäusedeckel (3) erstreckt.

9. Elektromotor nach einem der vorigen Ansprüche, **dadurch gekennzeichnet, dass** das Motorgehäuse (2) und der Spalttopf (7) aus Kunststoff gebildet sind und der metallische Kugellagertopf (8) mit dem Kunststoff unmittelbar umspritzt ist.

10. Elektromotor nach einem der vorigen Ansprüche, **dadurch gekennzeichnet, dass** die Motorwicklungen (6) den Spalttopf (7) in Umfangsrichtung umschließen und axial zu dem Kugellager (9) beabstandet angeordnet sind.

11. Elektromotor nach einem der vorigen Ansprüche 5 bis 10, **dadurch gekennzeichnet, dass** die Motorelektronik (5) auf einer Leiterplatte (14) angeordnet ist, die eine zentrale Öffnung (15) aufweist und sich das von dem Gehäusedeckel (3) vorstehende Kühlelement (11) durch die zentrale Öffnung (15) hindurch erstreckt.

12. Elektromotor nach einem der vorigen Ansprüche 5 bis 10, **dadurch gekennzeichnet, dass** die Motorelektronik auf einer Leiterplatte angeordnet ist, die eine zentrale Öffnung aufweist und sich der Spalttopf (7) durch die zentrale Öffnung hindurch erstreckt.

## Claims

1. An electric motor with a motor housing (2) which has a shaft section for receiving a motor shaft (4) and a motor section for receiving motor electronics (5) and motor windings (6), wherein the shaft section and the motor section are separated from each other in a sealed manner by a separating pot (7) arranged in the motor housing (2), wherein, in the separating pot (7), a metal ball bearing pot (8) is arranged, in which a ball bearing (9) is fixed, and wherein the ball bearing pot (8) lies indirectly against a motor housing section which is connected to the outer surroundings, via the separating pot (7), such that the motor housing functions as a cooling body and heat generated by the ball bearing (9) during operation is dissipated onto the motor housing and the outer surroundings via the ball bearing pot (8) and the separating pot (7), wherein the motor housing has a detachable housing cover (3) which can be put on an axial side of the remainder of the motor housing (2) and which forms the section of the motor housing which is indirectly connected to the ball bearing pot (8) via the separating pot (7), **characterized in that** the housing cover (3) has a cooling element (11) protruding axially in the direction of the ball bearing pot (8), which locally increases a surface for connection to the ball bearing pot (8) indirectly via the separating pot (7).

2. The electric motor according to claim 1, **characterized in that** the separating pot (7) is formed as a single piece through the motor housing (2) around a rotation axis of the motor shaft (4).

3. The electric motor according to claim 1 or 2, **characterized in that** the separating pot (7) and the ball bearing pot (8) are designed to be of identical shape in the section of the separating pot (7) in which the ball bearing pot (8) is arranged.

4. The electric motor according to any one of the preceding claims, **characterized in that**, between the separating pot (7) and the motor housing section (2) which is indirectly connected to the ball bearing pot (8) via the separating pot (7), a heat sink paste (10) is provided.

5. The electric motor according to the preceding claim, **characterized in that** the cooling element (11) is designed to be of cylindrical or conical shape with an axial surface for connection to an axial outer wall surface of the separating pot (7).

6. The electric motor according to any one of the preceding claims, **characterized in that** the ball bearing pot (8) forms a ball bearing seat into which the ball bearing (9) is pressed or inserted.

7. The electric motor according to any one of the preceding claims, **characterized in that** the ball bearing pot (8) has a free space (13) between the ball bearing (9) and the section of the motor housing (2) which is connected to the outer surroundings.

8. The electric motor according to any one of the preceding claims 5 to 7, **characterized in that** the separating pot (7) extends axially through the motor housing (2) up to the housing cover (3).

9. The electric motor according to any one of the preceding claims, **characterized in that** the motor housing (2) and the separating pot (7) are made of plastic, and the metal ball bearing pot (8) is directly overmolded with the plastic.

10. The electric motor according to any one of the preceding claims, **characterized in that** the motor windings (6) enclose the separating pot (7) in circumferential direction and are arranged axially spaced from the ball bearing (9).

11. The electric motor according to any one of the preceding claims 5 to 10, **characterized in that** the motor electronics (5) is arranged on a circuit board (14) which has a central opening (15), and **in that** the cooling element (11) protruding from the housing cover (3) extends through the central opening (15).

12. The electric motor according to any one of the preceding claims 5 to 10, **characterized in that** the motor electronics is arranged on a circuit board which has a central opening, and **in that** the separating pot (7) extends through the central opening.

## Revendications

1. Moteur électrique comprenant un carter de moteur (2) qui présente une section d'arbre pour recevoir un arbre de moteur (4) et une section de moteur pour recevoir une électronique de moteur (5) et des enroulements de moteur (6), dans lequel la section d'arbre et la section de moteur sont séparées de manière étanche l'une de l'autre par un pot d'entrefer (7) disposé dans le carter de moteur (2), dans lequel, dans le pot d'entrefer (7) est disposé un pot de roulement à billes (8) métallique dans lequel est fixé un roulement à billes (9), et dans lequel le pot de roulement à billes (8) est adjacent indirectement par l'intermédiaire du pot d'entrefer (7) à une section du carter de moteur en communication avec l'environnement extérieur de sorte que le carter de moteur sert de dissipateur thermique, et une chaleur générée par le roulement à billes (9) en cours de fonctionnement est dissipée par l'intermédiaire du pot de roulement à billes (8) et du pot d'entrefer (7) vers le carter de moteur et l'environnement extérieur, dans lequel le carter de moteur présente un couvercle de carter amovible (3) qui peut être posé sur un côté axial du reste du carter de moteur (2) et qui forme la section du carter de moteur qui est en communication avec le pot de roulement à billes (8) indirectement par l'intermédiaire du pot d'entrefer (7), **caractérisé en ce que** le couvercle de carter (3) présente un élément de refroidissement (11) faisant saillie axialement en direction du pot de roulement à billes (8) et qui agrandit localement une surface de raccordement au pot de roulement à billes (8) indirectement par l'intermédiaire du pot d'entrefer (7).

2. Moteur électrique selon la revendication 1, **caractérisé en ce que** le pot d'entrefer (7) est formé d'un seul tenant par le carter de moteur (2) autour d'un axe de rotation de l'arbre de moteur (4).

3. Moteur électrique selon la revendication 1 ou 2, **caractérisé en ce que** le pot d'entrefer (7) et le pot de roulement à billes (8) sont réalisés de forme identique dans la section du pot d'entrefer (7) dans laquelle est disposé le pot de roulement à billes (8).

4. Moteur électrique selon l'une quelconque des revendications précédentes, **caractérisé en ce qu'**une pâte thermique (10) est prévue entre le pot d'entrefer (7) et la section du carter de moteur (2) qui est en communication avec le pot de roulement à billes (8) indirectement par l'intermédiaire du pot d'entrefer (7).

5. Moteur électrique selon l'une quelconque des revendications précédentes, **caractérisé en ce que** l'élément de refroidissement (11) est réalisé de manière cylindrique ou conique avec une surface de raccordement axiale au niveau d'une surface de paroi extérieure axiale du pot d'entrefer (7).

6. Moteur électrique selon l'une quelconque des revendications précédentes, **caractérisé en ce que** le pot de roulement à billes (8) réalise un logement de roulement à billes dans lequel le roulement à billes (9) est pressé ou inséré.

7. Moteur électrique selon l'une quelconque des revendications précédentes, **caractérisé en ce que** le pot de roulement à billes (8) présente un espace libre (13) entre le roulement à billes (9) et la section du carter de moteur (2) en communication avec l'environnement extérieur.

8. Moteur électrique selon l'une quelconque des revendications précédentes 5 à 7, **caractérisé en ce que** le pot d'entrefer (7) s'étend axialement à travers le carter de moteur (2) jusqu'au couvercle de carter (3).

9. Moteur électrique selon l'une quelconque des revendications précédentes, **caractérisé en ce que** le carter de moteur (2) et le pot d'entrefer (7) sont formés en matière plastique, et le pot de roulement à billes (8) métallique est surmoulé directement avec la matière plastique.

10. Moteur électrique selon l'une quelconque des revendications précédentes, **caractérisé en ce que** les enroulements de moteur (6) enferment le pot d'entrefer (7) dans la direction circonférentielle et sont disposés de manière espacée axialement par rapport au roulement à billes (9).

11. Moteur électrique selon l'une quelconque des revendications précédentes 5 à 10, **caractérisé en ce que** l'électronique du moteur (5) est disposée sur une carte de circuits imprimés (14) qui présente une ouverture centrale (15), et l'élément de refroidissement (11) faisant saillie à partir du couvercle de carter (3) s'étend à travers l'ouverture centrale (15).

12. Moteur électrique selon l'une quelconque des revendications précédentes 5 à 10, **caractérisé en ce que** l'électronique du moteur est disposée sur une carte de circuits imprimés qui présente une ouverture centrale, et le pot d'entrefer (7) s'étend à travers l'ouverture centrale.
